# EUROPÄISCHE PATENTSCHRIFT

(11) **EP 3 448 635 B1**
(45) Veröffentlichungstag und Bekanntmachung des Hinweises auf die Patenterteilung: **07.09.2022**
(21) Anmeldenummer: 17723636.1
(22) Anmeldetag: 25.04.2017
(51) Int. Cl.: B25J 9/16, B25J 19/00, B25J 19/06, G05B 19/406

(54) **ROBOTER MIT EINER FÜR EINEN NETZAUSFALL ABGESICHERTEN STEUERUNG**
ROBOT HAVING A CONTROLLER PROTECTED FOR A NETWORK FAILURE
ROBOT MUNI D'UNE COMMANDE PROTÉGÉE CONTRE UNE PANNE DE SECTEUR

(30) Priorität: 25.04.2016 DE 102016005366
(43) Veröffentlichungstag der Anmeldung: 06.03.2019
(73) Patentinhaber: Franka Emika GmbH, 80797 München (DE)
(72) Erfinder: HADDADIN, Sami, 30173 Hannover (DE); PIETSCH, Björn, 81549 München (DE)
(74) Vertreter: Rösler Rasch van der Heide & Partner
(86) Internationale Anmeldenummer: PCT/EP2017/059693
(87) Internationale Veröffentlichungsnummer: WO 2017/186655

(56) Entgegenhaltungen:
- EP-A1- 2 379 286
- EP-B1- 2 379 286
- WO-A1-2007/131828
- WO-A1-2012/105194
- JP-A- 2002 218 676
- JP-A- 2002 218 676
- US-A1- 2012 116 581
- US-A1- 2014 292 231

## Beschreibung

Die Erfindung betrifft einen Roboter mit einer für einen Netzausfall (Ausfall von für den Betrieb des Roboters erforderlicher elektrischer Energie) abgesicherten Steuerung. Der Roboter weist hierzu vorteilhaft bewegliche, aktorisch angetriebene Elemente auf. Roboter benötigen für einen Betrieb typischerweise elektrische Energie. Diese wird, insbesondere bei immobilen Robotern, über ein elektrisches Netzteil des Roboters bereitgestellt, das eingangsseitig an eine elektrische Energiequelle, typischerweise an ein Stromnetz angeschlossen ist. Das Stromnetz bzw. die elektrische Energiequelle kann aus vielerlei Gründen ausfallen. Nach einem solchen Ausfall muss aus Gründen funktionaler Sicherheit gewährleistet werden, dass der Roboter, d.h. insbesondere seine beweglichen Elemente einen sicheren Zustand einnimmt/einnehmen. Dabei soll der Roboter selbst keinen Schaden nehmen, keinen Schaden in einer Umgebung des Roboters verursachen und nach Wiederherstellung der Netzstromversorgung möglichst ohne Probleme oder Eingriffe direkt wieder lauffähig sein.

Aus der US 2012/0116581 A1 ist eine Robotersteuerung bekannt, bei der eine Energieversorgung des Roboters über eine Hauptenergiequelle und für den Fall des Ausfalls dieser Hauptenergiequelle über eine Hilfsenergiequelle erfolgt.

Aus der WO 2010/069369 A1 ist eine Robotersteuerung bekannt, bei der ein Roboter nach Ausfall einer Hauptenergiequelle durch Nutzung der Energie einer Hilfsenergiequelle in eine sichere Parkposition bewegt wird.

Analoge Robotersteuerungen sind beispielsweise offenbart folgenden Dokumenten: US 2014/0292231 A1, JP 2002218676 A oder WO 2012/105194 A1.

Aus der WO 2007/131828 ist ein Roboter bekannt, der eine mechanische Bremsung verwendet.

Die Aufgabe der Erfindung ist es daher, einen Roboter bereitzustellen, der nach einem Ausfall der Stromversorgung insbesondere mit seinen beweglichen Elementen so schnell wie möglich einen sicheren Zustand einnimmt ohne ihn zu beschädigen und der nach Wiederherstellung der Netzstromversorgung einfach wieder lauffähig ist.

Die Erfindung ergibt sich aus den Merkmalen der unabhängigen Ansprüche. Vorteilhafte Weiterbildungen und Ausgestaltungen sind Gegenstand der abhängigen Ansprüche.

Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in der Figur dargestellt sind.

Die Aufgabe wird gelöst durch einen Roboter mit aktorisch angetriebenen Elementen, der zum Betrieb eine Soll-Betriebsspannung *U_{B}* und/oder einen Soll-Betriebsstrom *I_{B}* erfordert. Der Roboter umfasst eine Spannungs- und Stromquelle (d.h. ein Netzteil) mit einer Eingangsschnittstelle, an der eine Primärspannung *U_{P}* und ein Primärstrom *I_{P}* anliegt, wobei in einem Normalbetrieb die Primärspannung *U_{P}* gleich (im Rahmen der Regel- und Rauschtoleranzen) einer Soll-Primärspannung *U_{P,soll}* und der Primärstrom *I_{P}* gleich (im Rahmen der Regel-und Rauschtoleranzen) einem Soll-Primärstrom *I_{P,soll}* ist, und einer Ausgangsschnittstelle, an der eine Ist-Spannung *Uₗₛₜ* und ein Ist-Strom *I_{lsf}* bereitgestellt wird, wobei in dem Normalbetrieb (im Rahmen der Regel- und Rauschtoleranzen) gilt: *Uₗₛₜ* = *U_{B}* und *Iₗₛₜ* = *I_{B}*, einen in die Spannungs- und Stromquelle integrierten Energiespeicher, der nach einem Ausfall oder Abfall der Primärspannung/des Primärstroms, die Betriebsspannung *U_{B}* und den Betriebsstrom *I_{B}* für einen vorgegebenen Zeitraum *Δt* aufrecht erhält, eine Einheit zur Überwachung der an der Eingangsschnittstelle anliegenden Primärspannung *U_{P}*, wobei die Einheit derart ausgeführt ist, dass sobald die anliegende Primärspannung *U_{P}* um einen vorgegebenen Betrag *ΔU* von der Soll-Primärspannung *U_{P,soll}* abweicht, ein Stoppsignal erzeugt wird, und eine mit der Einheit verbundene Steuerungseinheit zur Steuerung des Roboters und seiner aktorisch angetriebenen Elemente, wobei die Steuereinheit dazu ausgeführt ist, den Roboter mit seinen Elementen nach Empfang des Stoppsignals in einen vorgegebenen sicheren Zustand zu steuern. Der Roboter zeichnet sich dadurch aus, dass die Einheit derart ausgeführt und eingerichtet ist, dass das Steuern des Roboters in den vorgegebenen sicheren Zustand ein Auslösen mechanischer Bremsen der angetriebenen Elemente umfasst, wobei die Bremsen erst dann ausgelöst werden, wenn der Roboter in einen dynamischen Zustand aktorisch abgebremst wurde, der durch die Summe der Bewegungsenergie einzelner oder aller beweglichen Elemente des Roboters gekennzeichnet ist, die kleiner ist als eine vorgegebene Grenzbewegungsenergie.

Die der Begriff "aktorisch angetriebene Elemente" wird vorliegend breit gefasst verstanden. Er umfasst grundsätzlich alle beweglichen, mittels eines Aktors angetriebenen Elemente des Roboters, beispielsweise Glieder eines Robotermanipulators, künstliche Gliedmaßen, Antriebsräder etc.

Die Spannungs- und Stromquelle ist vorzugsweise als Netzteil des Roboters realisiert, wobei der Roboter mit einer Soll-Betriebsspannung *U_{B}* und/oder einen Soll-Betriebsstrom *I_{B}* betrieben wird, die an der Ausgangsschnittstelle der Spannungs- und Stromquelle bereitgestellt wird. Die Eingangsschnittstelle der Spannungs- und Stromquelle ist vorteilhaft an ein Stromnetz angeschlossen, typischerweise ein Niederspannungsnetz (beispielsweise an ein 230 - 240 V Stromnetz oder ein 400 - 420 V Dreiphasenwechselstromnetz). Die Spannungs- und Stromquelle wandelt die eingangsseitig anliegende Primärspannung *U_{P}* vorteilhaft auf die an der Ausgangsschnittstelle bereitgestellte Ist-Spannung *Uₗₛₜ*. Typischerweise gilt: *U*_{*lst* <} *U_{P}*.

Im Normalbetrieb des Roboters ist die an der Ausgangsschnittstelle bereitgestellte Ist-Spannung *Uₗₛₜ* gleich der Soll-Betriebsspannung *U_{B}* (*Uₗₛₜ* = *U_{B}).* Darüber hinaus ist im Normalbetrieb des Roboters der an der Ausgangsschnittstelle bereitgestellte Ist-Strom *Iₗₛₜ* gleich dem Soll-Betriebsstrom *I_{B}* (*Iₗₛₜ* = *I_{B})*.

Die Spannungs- und Stromquelle weist erfindungsgemäß weiterhin einen in die Spannungs-und Stromquelle integrierten Energiespeicher auf, der derart ausgeführt und eingerichtet ist, dass nach einem Ausfall oder Abfall der Primärspannung *U_{P}* oder des Primärstroms *I_{P}* an der Eingangsschnittstelle, die Betriebsspannung *U_{B}* und der Betriebsstrom *I_{B}* an der Ausgangsschnittstelle für einen vorgegebenen Zeitraum *Δt* aufrecht erhalten bleibt. Der Energiespeicher weist vorzugsweise zur Energiespeicherung einen oder mehrere Kondensatoren und/oder eine oder mehrere Induktivitäten und/oder einen oder mehrere Akkumulatoren auf. Der Begriff" Induktivitäten" umfasst vorliegend beispielsweise Drosseln, Spulen, Transformatoren etc. Die Dimensionierung des Energiespeichers hängt vorteilhaft von dem Energiebedarf des Roboters ab, der erforderlich ist, um den Roboter aus einem beliebigen dynamischen Zustand (aller überhaupt möglichen dynamischen Zustände des Arbeiters) in einen sicheren Zustand zu bringen.

Der Begriff "sicherer Zustand" wird vorliegend weit gefasst verstanden. Er umfasst grundsätzlich jeden mittels Sensoren erfassbaren Zustand des Roboters. Insbesondere umfasst der Begriff einen vorgegebenen Zustand der beweglichen Elemente des Roboters, insbesondere ein Abbremsen aller beweglichen Elemente des Roboters in eine vorgegebene Pose oder ein Abbremsen aller beweglichen Elemente des Roboters in den Stand ohne Vorgabe einer Pose. Darüber hinaus kann der "sichere Zustand" weiterhin beispielsweise elektrische Zustände und datenbezogene Zustände des Roboters umfassen. So kann der sichere Zustand eine Datensicherung etc. umfassen.

Vorteilhaft erfolgt durch die Steuereinheit quasi instantan nach Vorliegen des Stoppsignals das Einleiten der Herstellung des sicheren Zustands, insbesondere eine Einleitung eines Bremsvorgangs der aktorisch angetriebenen beweglichen Elemente des Roboters in einen mechanischen sicheren Zustand. Der sichere Zustand wird vorteilhaft je nach Aufgabenstellung für den Roboter entsprechend vorgegeben und erfüllt vorteilhaft die Bedingung, dass während des Herstellens des sicheren Zustands, insbesondere durch ein Abbremsen der beweglichen Elemente des Roboters in den sicheren mechanischen Zustand vom Roboter keinerlei Gefährdung für seine Umgebung oder des Roboters selbst ausgeht.

Die Dimensionierung des Energiespeichers wird vorteilhaft derart gewählt, dass bei einem Totalausfall der/des an der Eingangsschnittstelle anliegenden Primärspannung *U_{P}*/Primärstroms *I_{P}* sichergestellt ist, dass die Betriebsspannung *U_{B}* und der Betriebsstrom *I_{B}* an der Ausgangsschnittstelle für den vorgegebenen Zeitraum *Δt* aufrecht erhalten bliebt. Der Zeitraum *Δt* ist vorteilhaft ein erforderlicher Zeitraum, in dem der Roboter aus einem beliebigen Zustand in einen sicheren Zustand gebracht werden kann.

Eine entsprechende Dimensionierung des Energiespeichers gewährleistet somit, dass selbst einem Totalausfall der Spannung bzw. Stromversorgung auf der Eingangsseite der Spannungs- und Stromquelle stets sichergestellt ist, dass der Roboter aus einem beliebigen Zustand, in einen sicheren Zustand überführt werden kann. Der beliebige Zustand ist ein Element aus der Menge derjenigen Zustände, die der Roboter überhaupt in der Lage ist einzunehmen.

Eine vorteilhafte Weiterbildung des vorgeschlagenen Roboters zeichnet sich dadurch aus, dass Aktoren der angetriebenen Elemente zur Rekuperation elektrischer Energie ausgeführt sind und mit dem integrierten Energiespeicher verbindbar sind. Somit ist es vorteilhaft möglich Bewegungsenergie der beweglichen Elemente des Roboters während des Bremsvorgangs in elektrische Energie zu überführen und diese zur Erhöhung der im Energiespeicher vorrätigen Energie zu nutzen.

Erfindungsgemäß ist die Einheit derart ausgeführt, dass das Steuern des Roboters in den vorgegebenen sicheren Zustand ein Auslösen mechanischer Bremsen der angetriebenen Elemente umfasst. Dabei wird/werden die mechanische/n Bremse/n erst dann ausgelöst, wenn der Roboter in einen dynamischen Zustand aktorisch abgebremst wurde, der durch die Summe der Bewegungsenergie einzelner oder aller beweglichen Elemente des Roboters gekennzeichnet ist, die kleiner ist als eine vorgegebene Grenzbewegungsenergie. Dadurch kann sichergestellt werden, dass ein abruptes Eingreifen von mechanischen Bremsen erst dann erfolgt, wenn durch das Eingreifen der mechanischen Bremsen keine mechanischen oder sonstigen Beschädigungen des Roboters bewirkt werden. Zuvor wird der Roboter, d.h. seine aktorisch angetriebenen beweglichen Elemente, vorzugsweise aktorisch gebremst. Diese Weiterbildung erhöht die Verfügbarkeit des Robotersystems, da ein hartes Ansprechen von mechanischen Bremsen mit der Gefahr mechanischer Schäden im Regelfall vermieden wird.

Gemäß einer vorteilhaften Weiterbildung des vorgeschlagenen Roboters wird das Stoppsignal als verschlüsseltes Datensignal über die symmetrisch ausgeführte Datenverbindung von der Einheit zu der Steuereinheit übertragen. Weiterhin vorteilhaft ist das Stoppsignal ein optisches Signal und die Datenverbindung zur Übertragung optischer Signale ausgeführt.

Grundsätzlich eignet sich für diese Übertragung jedes kabelgebundene oder faseroptische Übertragungsverfahren: analoge Spannung, digitales Signal (direkt oder moduliert), Kommunikationsprotokoll. Die letzteren beiden Gruppen sind optisch übertragbar; dies ist vorteilhaft, weil dadurch gleichzeitig eine Isolation erreicht wird (d.h. eine Erfassung auf der Eingangsschnittstelle mit hoher Spannung, Verarbeitung an der Ausgangsschnittstelle typischerweise mit geringerer Spannung).

Das Stoppsignal ist vorteilhaft ein hochpriorisiertes Signal an die Steuereinheit des Roboters, das angibt, dass ein Energieausfall an der Ausgangsschnittstelle bevorsteht.

Vorteilhaft erfolgt bei einem Spannungsabfall an der Ausgangsschnittstelle ein sofortiges Eingreifen mechanischer Bremsen, so dass die beweglichen Elemente des Roboters nahezu unvermittelt gebremst werden. Somit ist immer eine sichere Einleitung eines Bremsvorgangs gewährleistet. In diesem Fall ist keine sichere Realisierung der Energiespeicherfunktion erforderlich, da die Einleitung des mechanischen Bremsvorgangs unabhängig von der verfügbaren Energie des Energiespeichers erfolgt.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigt:

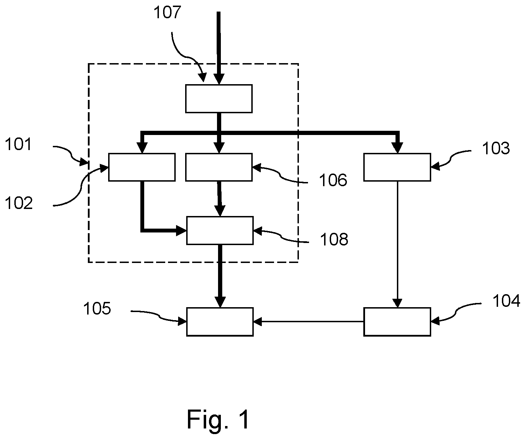

- Fig. 1: einen schematisierten Aufbau einer Ausführungsform des vorgeschlagenen Roboters.
Fig. 1 zeigt einen schematisierten Aufbau einer Ausführungsform des vorgeschlagenen Roboters mit aktorisch angetriebenen Elementen 105, der zum Betrieb eine Soll-Betriebsspannung *U_{B}* und/oder einen Soll-Betriebsstrom *I_{B}* erfordert. Der Roboter umfasst eine Spannungs- und Stromquelle 101 mit einer Eingangsschnittstelle 107, an der eine Primärspannung *U_{P}* und ein Primärstrom *I_{P}* anliegt, wobei in einem Normalbetrieb die Primärspannung *U_{P}* gleich einer Soll-Primärspannung *U_{P,soll}* und der Primärstrom *I_{P}* gleich einem Soll-Primärstrom *I_{P,soll}* ist, und einer Ausgangsschnittstelle 108, an der eine Ist-Spannung *Uₗₛₜ* und ein Ist-Strom *Iₗₛₜ* bereitgestellt wird, wobei in dem Normalbetrieb gilt: *Uₗₛₜ* = *U_{B}* und *Iₗₛₜ* = *I_{B}*.

Die Spannungs- und Stromquelle 101 umfasst einen darin integrierten Energiespeicher 102, vorliegend umfassen eine Mehrzahl von Kondensatoren, der nach einem Ausfall oder Abfall der Primärspannung/des Primärstroms, die Betriebsspannung *U_{B}* und der Betriebsstrom *I_{B}* an der Ausgangsschnittstelle 108 für einen vorgegebenen Zeitraum *Δt* aufrechterhält.

Die Spannungs- und Stromquelle 101 umfasst weiterhin einen Wandler 106, der die an der Eingangsschnittstelle 107 bereitgestellte Primärspannung *U_{P}* in einen Niedervoltbereich transformiert und an der Ausgangsschnittstelle 108 als Ist-Spannung *Uₗₛₜ* bereitstellt.

Der Roboter umfasst weiterhin eine Einheit 103 zur Überwachung der an der Eingangsschnittstelle 107 anliegenden Primärspannung *U_{P}*, wobei die Einheit 103 derart ausgeführt ist, dass sobald die anliegende Primärspannung *U_{P}* um einen vorgegebenen Betrag *ΔU* von der Soll-Primärspannung *U_{P,soll}* abweicht, ein Stoppsignal erzeugt wird. Schließlich umfasst der Roboter eine mit der Einheit 103 verbundene Steuerungseinheit 104 zur Steuerung des Roboters und seiner aktorisch angetriebenen Elemente 105, wobei die Steuereinheit 104 dazu ausgeführt ist, den Roboter mit seinen Elementen 105 nach Empfang des Stoppsignals in einen vorgegebenen sicheren Zustand zu steuern.

In der Fig. 1 sind die Last Strompfade mit fetteren Pfeilen gekennzeichnet. Die dünneren Pfeile ausgehend von der Einheit 103 zur Steuereinheit 104 und von dort weiter zu den aktorisch angetriebenen Elementen des Roboters sind Datenleitungen. Vorteilhaft ist das Stoppsignal ein optisches Signal und die Datenleitungen sind als Lichtleiter ausgeführt.

### Bezugszeichenliste

- 101: Spannungs- und Stromquelle /Netzteil
- 102: in die Spannungs- und Stromquelle integrierter Energiespeicher
- 103: Einheit
- 104: Steuereinheit
- 105: aktorisch angetriebene Elemente des Roboters
- 106: Transformator
- 107: Eingangsschnittstelle
- 108: Ausgangsschnittstelle

## Patentansprüche

1. Roboter mit aktorisch angetriebenen Elementen (105), der zum Betrieb eine Soll-Betriebsspannung *U_{B}* und/oder einen Soll-Betriebsstrom *I_{B}* erfordert, umfassend:
- eine Spannungs- und Stromquelle (101) mit einer Eingangsschnittstelle (107), an der eine Primärspannung *U_{P}* und ein Primärstrom *I_{P}* anliegt, wobei in einem Normalbetrieb die Primärspannung *U_{P}* gleich einer Soll-Primärspannung *U_{P,soll}* und der Primärstrom *I_{P}* gleich einem Soll-Primärstrom *I_{P,soll}* ist, und einer Ausgangsschnittstelle (108), an der eine Ist-Spannung *Uₗₛₜ* und ein Ist-Strom *Iₗₛₜ* bereitgestellt wird, wobei in dem Normalbetrieb gilt: *Uₗₛₜ* = *U_{B}* und *Iₗₛₜ* = *I_{B}*,
- einen in die Spannungs- und Stromquelle (101) integrierten Energiespeicher (102), der nach einem Ausfall oder Abfall der Primärspannung/des Primärstroms, die Betriebsspannung *U_{B}* und der Betriebsstrom *I_{B}* für einen vorgegebenen Zeitraum *Δt* aufrechterhält,
- eine Einheit (103) zur Überwachung der an der Eingangsschnittstelle (107) anliegenden Primärspannung *U_{P}*, wobei die Einheit (103) derart ausgeführt ist, dass sobald die anliegende Primärspannung *U_{P}* um einen vorgegebenen Betrag *ΔU* von der Soll-Primärspannung *U_{P,soll}* abweicht, ein Stoppsignal erzeugt wird, und
- eine mit der Einheit (103) verbundene Steuerungseinheit (104) zur Steuerung des Roboters und seiner aktorisch angetriebenen Elemente (105), wobei die Steuereinheit (104) dazu ausgeführt ist, den Roboter (105) mit seinen Elementen (105) nach Empfang des Stoppsignals in einen vorgegebenen sicheren Zustand zu steuern,
**dadurch gekennzeichnet**, die Einheit (103) derart ausgeführt und eingerichtet ist, dass das Steuern des Roboters in den vorgegebenen sicheren Zustand ein Auslösen mechanischer Bremsen der angetriebenen Elemente umfasst, wobei die Bremsen erst dann ausgelöst werden, wenn der Roboter in einen dynamischen Zustand aktorisch abgebremst wurde, der durch die Summe der Bewegungsenergie einzelner oder aller beweglichen Elemente des Roboters gekennzeichnet ist, die kleiner ist als eine vorgegebene Grenzbewegungsenergie.

2. Roboter nach Anspruch 1,
bei dem Aktoren der aktorisch angetriebenen Elemente (105) zur Rekuperation elektrischer Energie mit dem integrierten Energiespeicher (102) verbunden sind.

3. Roboter nach einem der Ansprüche 1 bis 2,
bei dem der Energiespeicher (102) einen oder mehrere Kondensatoren und/oder eine oder mehrere Induktivitäten und/oder einen oder mehrere Akkumulatoren umfasst.

4. Roboter nach einem der Ansprüche 1 bis 3,
bei dem das Stoppsignal als symmetrisches und verschlüsseltes Datensignal über die Datenverbindung von der Einheit (103) zu der Steuereinheit (104) übertragen wird.

5. Roboter nach einem der Ansprüche 1 bis 4,
bei dem das Stoppsignal ein optisches Signal ist, und die Datenverbindung zur Übertragung optischer Signale ausgeführt ist.

## Claims

1. Robot with actuator-driven elements (105) that requires a nominal operating voltage Uo and/or a nominal operating current I₀ for operation, comprising:
- a voltage and current source (101) with an input interface (107), to which a primary voltage Up and a primary current Ip are applied, wherein, during normal operation, the primary voltage U_{P} is equal to a nominal primary voltage U_{P,Nom}, and the primary current Ip is equal to a nominal primary current I_{P,Nom}, and an output interface (108), where an actual voltage U_{Act} and an actual current I_{Act} is provided, wherein, during normal operation, the following applies: U_{Act} = U_{O} and I_{Act} = I_{O},
- an energy storage device (102) integrated into the voltage and current source (101) which maintains Δt for a specified period of time after a failure or drop in the primary voltage/primary current, the operating voltage Uo and the operating current I_{O},
- a unit (103) for monitoring the primary voltage Up applied to the input interface (107), wherein the unit (103) is designed in such a way that, as soon as the applied primary voltage U_{P} deviates by a specified amount ΔU from the nominal primary voltage U_{P,Nom}, a stop signal is generated, and
- a control unit (104) connected to the unit (103) for controlling the robot and its actuator-driven elements (105), wherein the control unit (104) is designed to control the robot (105) with its elements (105) after receiving the stop signal in a specified safe state,
**characterized in that** the unit (103) is designed and set up in such a way that the control of the robot into the specified safe state includes a triggering of mechanical brakes of the driven elements, wherein the brakes are triggered only when the robot has been actively braked into a dynamic state, which is **characterized by** the sum of the kinetic energy of individual or all moving elements of the robot, which is smaller than a specified motion energy threshold.

2. The robot according to Claim 1,
in which actuators of the actuator-driven elements (105) are connected to the integrated energy store (102) for the recuperation of electrical energy.

3. The robot according to any one of the Claims 1 to 2,
in which the energy store (102) comprises one or a plurality of capacitors and/or one or a plurality of inductors and/or one or a plurality of accumulators.

4. The robot according to any one of the Claims 1 to 3,
in which the stop signal is transmitted as a symmetrical and encrypted data signal via the data connection from the unit (103) to the control unit (104).

5. The robot according to one of the Claims 1 to 4,
in which the stop signal is an optical signal, and the data connection is designed for the transmission of optical signals.

## Revendications

1. Robot avec des éléments entraînés par actionneurs (105), qui nécessite pour fonctionner une tension de fonctionnement théorique *U_{B}* et/ou un courant de fonctionnement théorique *I_{B}*, comprenant :
- une source de tension et de courant (101) avec une interface d'entrée (107), à laquelle est appliquée une tension primaire *U_{P}* et un courant primaire *Iₚ*, sachant que dans un fonctionnement normal la tension primaire *U_{P}* est égale à une tension primaire théorique *U_{P}*, *théo* et le courant primaire *I_{P}* est égal à un courant primaire théorique *I_{p,théo}* et une interface de sortie (108) à laquelle sont fournis une tension réelle *U_{réel}* et un courant réel *I_{réel}*, sachant que dans le fonctionnement normal, On a : *U_{réel}* = *UB et I_{réel}* = *I_{B}*,
- un accumulateur d'énergie (102) intégré dans la source de tension et de courant (101), qui maintient la tension de fonctionnement *U_{B}* et le courant de fonctionnement *I_{B}* pour une période de temps prédéfinie *Δt* après une panne ou une chute de la tension primaire / du courant primaire,
- une unité (103) destinée à surveiller la tension primaire *Uₚ* appliquée à l'interface d'entrée (107), sachant que l'unité (103) est réalisée de telle manière que dès que la tension primaire appliquée *Uₚ* s'écarte d'un montant prédéfini *ΔU* de la tension primaire théorique *U*_{*p*,*théo*}, un signal d'arrêt est produit, et
- une unité de commande (104) reliée à l'unité (103) pour commander le robot et ses éléments entraînés par actionneurs (105), sachant que l'unité de commande (104) est réalisée pour commander le robot (105) avec ses éléments (105) après réception du signal d'arrêt dans un état fiable prédéfini,
**caractérisé en ce que** l'unité (103) est réalisée et agencée de telle manière que la commande du robot comprend à l'état fiable prédéfini un déclenchement des freins mécaniques des éléments entraînés, sachant que les freins ne sont ensuite déclenchés que lorsque le robot a été freiné par actionneurs dans un état dynamique, qui est **caractérisé par** le total de l'énergie cinétique d'éléments individuels ou de tous les éléments mobiles du robot, qui est plus petite qu'une énergie cinétique limite prédéfinie.

2. Robot selon la revendication 1,
pour lequel les actionneurs des éléments entraînés par actionneurs (105) sont reliés à l'accumulateur d'énergie intégré (102) pour la récupération de l'énergie électrique.

3. Robot selon l'une quelconque des revendications 1 à 2, pour lequel l'accumulateur d'énergie (102) comprend un ou plusieurs condensateurs et/ou une ou plusieurs inductances et/ou un ou plusieurs accumulateurs.

4. Robot selon l'une quelconque des revendications 1 à 3, pour lequel le signal d'arrêt est transmis sous la forme de signal de données symétrique et codé par la liaison de données de l'unité (103) à l'unité de commande (104).

5. Robot selon l'une quelconque des revendications 1 à 4, pour lequel le signal d'arrêt est un signal optique et la liaison de données est effectuée pour transmission de signaux optiques.
